# EUROPÄISCHE PATENTSCHRIFT

(11) **EP 3 898 297 B1**
(45) Veröffentlichungstag und Bekanntmachung des Hinweises auf die Patenterteilung: **05.10.2022**
(21) Anmeldenummer: 19820678.1
(22) Anmeldetag: 03.12.2019
(51) Int. Cl.: B60G 17/00

(54) **VERFAHREN ZUR ANPASSUNG EINER ÜBERTRAGUNGSFUNKTION EINES AKTIVEN FAHRWERKS EINES FAHRZEUGS**
METHOD FOR ADAPTING THE TRANSFER FUNCTION OF A VEHICLE ACTIVE CHASSIS SUSPENSION
PROCÉDÉ D'AJUSTEMENT D'UNE FONCTION DE TRANSFERT D'UN CHASSIS ACTIF DE VÉHICULE

(30) Priorität: 21.12.2018 DE 102018222762
(43) Veröffentlichungstag der Anmeldung: 27.10.2021
(73) Patentinhaber: Continental Automotive Technologies GmbH, 30165 Hannover (DE)
(72) Erfinder: SMITS, Thomas, 60488 Frankfurt am Main (DE)
(74) Vertreter: Continental Corporation
(86) Internationale Anmeldenummer: PCT/EP2019/083507
(87) Internationale Veröffentlichungsnummer: WO 2020/126480

(56) Entgegenhaltungen:
- WO-A1-2016/118887
- DE-A1- 10 320 809
- FR-A3- 2 957 306
- US-B2- 9 807 172

## Beschreibung

Die Erfindung betrifft ein Verfahren zur Anpassung einer Übertragungsfunktion eines aktiven Fahrwerks eines Fahrzeugs. Die Erfindung umfasst ferner ein Fahrzeug mit einem aktiven Fahrwerk, sowie eine zentrale Rechnereinheit.

Zur Reduzierung von vertikalen Beschleunigungen eines Fahrzeugs aufgrund von Unebenheiten eines befahrenen Streckenabschnitts werden in Fahrzeugen aktive Fahrwerke eingebaut. Diese passen beispielsweise eine Höheneinstellung bzw. die Dämpfercharakteristik für ein oder mehrere Räder des Fahrzeugs präventiv an, um Unebenheiten in einem Oberflächenprofil des Streckenabschnitts präventiv auszugleichen. Insbesondere für autonome Fahrzeuge ist die Verwendung eines aktiven Fahrwerks vorteilhaft, weil die Fahrzeuginsassen nicht mit der Steuerung des Fahrzeugs beschäftigt sind und somit anderen Tätigkeiten nachgehen können. Aufgrund von Unebenheiten des Oberflächenprofils kann dabei leicht Reisekrankheit, welche auch als Kinetose bekannt ist, auftreten.

Ein präventives Eingreifen eines aktiven Fahrwerks erfordert jedoch, dass das Oberflächenprofil des Streckenabschnitts vor einem Befahren durch das Fahrzeug zur Ansteuerung des aktiven Fahrwerks bekannt ist. Zu diesem Zweck werden in Fahrzeugen Sensoreinrichtungen wie beispielsweise Stereoskopkameras oder Lidar-Erfassungssysteme eingebaut, welche das Oberflächenprofil des Streckenabschnitts vor dem Fahrzeug erfassen. Somit können Unebenheiten vor einem Überfahren durch das Fahrzeug festgestellt und das aktive Fahrwerk dementsprechend angepasst werden.

Neben einer möglichst genauen Kenntnis des Oberflächenprofils des Streckenabschnitts ist es für ein ordnungsgemäßes Funktionieren des aktiven Fahrwerks erforderlich, dass eine Übertragungsfunktion, welche die Stellwerte des aktiven Fahrwerks festlegt, an das Fahrzeug angepasst ist. Ist die Übertragungsfunktion für das Fahrzeug und das aktive Fahrwerk nicht entsprechend ausgelegt, kann es zu erhöhten vertikalen Beschleunigungen des Fahrzeugs bei einem Überfahren einer Unebenheit kommen. Eine fehlerhafte Auslegung der Übertragungsfunktion kann sich aufgrund von Abweichungen eines individuellen Fahrwerks von einem prototypischen Auslegungsmodell ergeben. Diese Abweichungen können auf den Alterungsprozess des aktiven Fahrwerks und die jeweilige Beanspruchung des aktiven Fahrwerks zurückzuführen sein.

Aus FR 2 957 306 A3 ist ein Dämpfer eines Kraftfahrzeugs bekannt, der mit einem Optimierungsmodul verbunden ist. Ein Steuermodul liefert dem Dämpfer ein Steuersignal zur Regelung eines Dämpfungskoeffizienten des Dämpfers.

Ein Verfahren zum Steuern eines Aktuators offenbart WO 2016/118887 A1. Das Verfahren umfasst ein Verwenden eines Bewegungssensors, um relative Bewegungen zwischen einer ersten Komponente und einer zweiten Komponente zu erfassen. Die relativen Bewegungen veranlassen einen Aktuator, eine Kraft auf die erste Komponente auszuüben. Ferner umfasst das Verfahren ein Betreiben des Aktuators auf Grundlage eines gewünschten Wertes eines Betriebsparameters, um eine Ausgabekraft auf die erste Komponente oder die zweite Komponente aufzubringen.

Es ist eine Aufgabe der Erfindung, eine Übertragungsfunktion zur Regelung eines aktiven Fahrwerks an das individuelle aktive Fahrwerk anzupassen.

Durch die Erfindung wird ein Verfahren zur Anpassung einer Übertragungsfunktion eines aktiven Fahrwerks eines Fahrzeugs bereitgestellt. In dem Verfahren ist es vorgesehen, dass durch das Fahrzeug ein Streckenabschnitt befahren wird, für den in einer Steuereinheit des Fahrzeugs ein Oberflächenprofil gespeichert ist. Das aktive Fahrwerk wird durch die Steuereinheit nach einer vorbestimmten Übertragungsfunktion zur Anpassung an das Oberflächenprofil mittels eines Stellwerts angesteuert, um Unebenheiten des Oberflächenprofils auszugleichen. Durch eine Stoßdämpfersensorik und/oder eine Reifensensorik des Fahrzeugs werden vertikale Beschleunigungen während des Befahrens des Streckenabschnitts erfasst und an die Steuereinheit übertragen. Dabei ist es vorgesehen, dass der Stellwert und die vertikalen Beschleunigungen durch das Fahrzeug an einen externen Zentralrechner übertragen werden.

Mit anderen Worten betrifft das Verfahren eine Optimierung der Übertragungsfunktion, welche eine Regelung des aktiven Fahrwerks des Fahrzeugs durch die Steuereinheit festlegt. In dem Verfahren ist es vorgesehen, dass das Fahrzeug den Streckenabschnitt befährt. Für den Streckenabschnitt ist in der Steuereinheit des Fahrzeugs das Oberflächenprofil gespeichert, welches Höhendaten des Streckenabschnitts beinhaltet. Um vertikale Beschleunigungen des Fahrzeugs bei dem Befahren des Streckenabschnitts zu minimieren, wird das aktive Fahrwerk durch die Steuereinheit geregelt. Die Steuereinheit regelt das aktive Fahrwerk, indem für das Oberflächenprofil gemäß der vorbestimmten Übertragungsfunktion Stellwerte berechnet werden. Die Übertragungsfunktion ist dazu ausgelegt, dass durch die Ansteuerung des aktiven Fahrwerks Unebenheiten ausgeglichen werden. Diese Stellwerte werden durch die Steuereinheit an das aktive Fahrwerk übertragen. Das aktive Fahrwerk arbeitet gemäß den empfangenen Stellwerten. Trotz des aktiven Fahrwerks erfolgen vertikale Beschleunigungen des Fahrzeugs während des Befahrens des Streckenabschnitts. Diese vertikalen Beschleunigungen werden zur späteren Analyse durch die Stoßdämpfersensorik und/oder die Reifensensorik des Fahrzeugs erfasst. Es ist vorgesehen, dass die gemäß der vorbestimmten Übertragungsfunktion durch die Steuereinheit für das Oberflächenprofil berechneten Stellwerte zusammen mit der erfassten vertikalen Beschleunigung durch das Fahrzeug an den externen Zentralrechner übertragen werden.

Durch das Verfahren ergibt sich der Vorteil, dass die Stellwerte und die vertikalen Beschleunigungen auf dem externen Zentralrechner zur Optimierung der Übertragungsfunktion bereitgestellt werden.

Es kann beispielsweise vorgesehen sein, dass es sich bei dem Fahrzeug um einen Personenkraftwagen oder einen Lastkraftwagen handelt, welcher sich entlang des Streckenabschnitts fortbewegt. Bei dem Streckenabschnitt kann es sich beispielsweise um eine Straße handeln. Diese kann Unebenheiten aufweisen, welche in dem Oberflächenprofil beschrieben sein können. Das Oberflächenprofil kann in der Steuereinheit gespeichert sein. Die Steuereinheit kann einen Mikroprozessor und/oder einen Mikrocontroller umfassen. Die Steuereinheit kann dazu eingerichtet sein, präventive Maßnahmen zu ergreifen, um bevorstehende Unebenheiten durch eine Regelung des aktiven Fahrwerks mittels Stellwerten auszugleichen. Um das aktive Fahrwerk entsprechend regeln zu können, ist in der Steuereinheit die vorbestimmte Übertragungsfunktion gespeichert, mit welcher die Stellwerte berechnet werden können. Als Eingangsgrößen für die vorbestimmte Übertragungsfunktion können das Oberflächenprofil, eine aktuelle geografische Position des Fahrzeugs, eine aktuelle Geschwindigkeit, eine jeweilige Ausrichtung der Räder und/oder ein Gewicht des Fahrzeugs vorgesehen sein. Das aktive Fahrwerk kann zum Beispiel ein aktives Dämpfungssystem mit einer verstellbaren Zug- und Druckstufe umfassen. Dies kann als Luftdruckversion oder mit zusätzlicher hydraulischer Verstellung für einen Niveauausgleich ausgebildet sein. Die Stellwerte können dabei einen Dämpfungsfaktor und/oder Ventileinstellungen von Stoßdämpfern umfassen. Es ist vorgesehen, dass die ausgegebenen Stellwerte und die erfassten vertikalen Beschleunigungen von der Steuereinheit protokolliert und durch das Fahrzeug an den externen Zentralrechner übertragen werden. Es kann vorgesehen sein, dass die Übertragung beispielsweise über ein mobiles Funknetzwerk an den externen Zentralrechner erfolgt. Bei dem externen Zentralrechner kann es sich beispielsweise um einen Rechner mit einem Mikroprozessor oder einen Rechnerverband handeln. Werden die Stellwerte durch den externen Zentralrechner bereitgestellt, kann ein Versenden der Stellwerte an den externen Zentralrechner durch das Fahrzeug unterbleiben.

Die Erfindung umfasst Weiterbildungen, durch die sich weitere Vorteile ergeben.

Eine Weiterbildung der Erfindung sieht vor, dass durch den externen Zentralrechner eine Abweichung der vertikalen Beschleunigungen von mittels eines fahrzeugspezifischen Referenzmodells für den Streckenabschnitt berechneten, erwarteten vertikalen Beschleunigungen bestimmt wird. Mit anderen Worten ist es vorgesehen, dass die vertikalen Beschleunigungen, welche während des Befahrens des Streckenabschnitts durch die Stoßdämpfersensorik und/oder die Reifensensorik des Fahrzeugs erfasst wurden, in dem externen Zentralrechner ausgewertet werden. Dabei bestimmt der Rechner unter Verwendung des fahrzeugspezifischen Referenzmodells die erwarteten vertikalen Beschleunigungen, die bei einem Befahren des Streckenabschnitts für das Oberflächenprofil und die Stellwerte zu erwarten sind. Diese erwarteten vertikalen Beschleunigungen werden mit den erfassten vertikalen Beschleunigungen verglichen und die Abweichung bestimmt. Die Abweichung beschreibt somit die Differenz zwischen den erfassten vertikalen Beschleunigungen und den erwarteten vertikalen Beschleunigungen. Dadurch ergibt sich der Vorteil, dass auf dem Zentralrechner Abweichungen oder Fehlfunktionen des Fahrzeugs festgestellt werden können. Es kann beispielsweise vorgesehen sein, dass die Steuereinheit des Fahrzeugs die erfassten vertikalen Beschleunigungen protokoliert. Die erfassten vertikalen Beschleunigungen können durch das Kraftfahrzeug an den externen Zentralrechner übertragen werden. Für den Streckenabschnitt kann der externe Zentralrechner mittels des Referenzmodells bestimmen, welche vertikalen Beschleunigungen zu erwarten sind. Die entsprechenden Werte kann der externe Zentralrechner mit den durch das Fahrzeug bereitgestellten Werten vergleichen, um die Abweichung zu bestimmen.

Eine Weiterbildung der Erfindung sieht vor, dass aus der Abweichung durch den Zentralrechner das Referenzmodell angepasst wird. Mit anderen Worten ist es vorgesehen, dass das Referenzmodell des externen Zentralrechners durch den externen Zentralrechner angepasst wird, damit die Abweichung reduziert wird. Dadurch ergibt sich der Vorteil, dass fehlerhafte Annahmen bezüglich des Referenzmodells in dem Zentralrechner korrigiert werden können. Es kann beispielsweise vorgesehen sein, dass der Zentralrechner die erfassten vertikalen Beschleunigungen eines oder mehrerer Kraftfahrzeuge auswertet und mit den erwarteten vertikalen Beschleunigungen vergleicht. Ergeben sich Abweichungen, die einen vorbestimmten Schwellenwert überschreiten, kann dies darauf hinweisen, dass das in dem Zentralrechner hinterlegte Referenzmodell fehlerhaft ist. In diesem Fall kann es vorgesehen sein, dass das Referenzmodell angepasst wird. Dieses kann beispielsweise mittels eines Fit-Verfahrens erfolgen, wobei die Werte des Referenzmodells angepasst werden bis die Abweichungen minimal sind.

Eine Weiterbildung der Erfindung sieht vor, dass der externe Zentralrechner aus der Abweichung eine angepasste Übertragungsfunktion generiert und an die Steuereinheit überträgt. Die Steuereinheit ersetzt die vorbestimmte Übertragungsfunktion durch die angepasste Übertragungsfunktion. Mit anderen Worten wird durch den externen Zentralrechner eine angepasste Übertragungsfunktion erstellt, welche auf Grundlage der Abweichungen berechnet wurde. Die Steuereinheit ersetzt die vorbestimmte Übertragungsfunktion durch die angepasste Übertragungsfunktion, wodurch die zukünftigen Stellwerte auf der angepassten Übertragungsfunktion basieren. Durch die Weiterbildung ergibt sich der Vorteil, dass fehlerhafte Übertragungsfunktionen einzelner Fahrzeuge korrigiert werden können. Aufgrund von Serienschwankungen oder eines Alterungsprozesses des Fahrzeugs kann die Abweichung für das Fahrzeug einen vorbestimmten Schwellenwert überschreiten. In diesem Fall kann es vorgesehen sein, dass der Zentralrechner die angepasste Übertragungsfunktion mittels eines vorbestimmten Fit-Verfahrens generiert.

Eine Weiterbildung der Erfindung sieht vor, dass die Stellwerte für den Streckenabschnitt nach der vorbestimmten Übertragungsfunktion durch den externen Zentralrechner berechnet und an die Steuereinheit zur Ansteuerung des aktiven Fahrwerks übertragen werden. Mit anderen Worten wird das aktive Fahrwerk in dieser Weiterbildung durch den externen Zentralrechner gesteuert. Die vorbestimmte Übertragungsfunktion und das Oberflächenprofil für den Streckenabschnitt sind hierfür in dem externen Zentralrechner gespeichert. Die Stellwerte werden durch den externen Zentralrechner berechnet und an das Fahrzeug übertragen. Das Fahrzeug leitet die Stellwerte an die Steuereinheit weiter, welche das aktive Fahrwerk mittels der Stellwerte regelt. Durch die Weiterbildung ergibt sich der Vorteil, dass eine Regelung des aktiven Fahrwerks durch den externen Zentralrechner ermöglicht wird. Es kann beispielsweise vorgesehen sein, dass der Zentralrechner die Stellwerte für das aktive Fahrwerk an das Fahrzeug sendet, nachdem das Fahrzeug diese für den Streckenabschnitt angefordert hat. Der Zentralrechner kann die Stellwerte berechnen und an das Fahrzeug übertragen. Die Stellwerte können beispielsweise für den Streckenabschnitt berechnete Ventilstellungen von Dämpfern des aktiven Fahrwerkes umfassen.

Eine Weiterbildung der Erfindung sieht vor, dass das Oberflächenprofil durch eine Sensorvorrichtung des Fahrzeugs generiert und an die Steuereinheit übertragen wird. Mit anderen Worten umfasst das Fahrzeug die Sensorvorrichtung, die dazu eingerichtet ist, das Oberflächenprofil des vorliegenden Streckenabschnitts zu erfassen und zu generieren. Das Oberflächenprofil wird also während des Überfahrens des Streckenabschnitts oder bei einer vorherigen Überfahrung des Streckenabschnitts durch das Fahrzeug selbst erfasst. Dadurch ergibt sich der Vorteil, dass eine Bereitstellung des Oberflächenprofils durch das Fahrzeug selbst ermöglicht ist und das Verfahren unabhängig von einer Verbindung zu dem externen Zentralrechner oder einem vorbestehenden Datenbestand der Steuereinheit betrieben werden kann. Es kann beispielsweise vorgesehen sein, dass die Sensorvorrichtung eine Radar-, Lidar- oder Kameraeinheit umfasst, welche dazu eingerichtet ist, die Oberfläche des Streckenabschnitts vor einem Befahren zu erfassen und das Oberflächenprofil zu generieren. Das Oberflächenprofil kann dann an die Steuereinheit übertragen und durch diese gespeichert werden.

Eine Weiterbildung der Erfindung sieht vor, dass das Oberflächenprofil durch das Fahrzeug an den externen Zentralrechner übertragen wird. Mit anderen Worten ist es vorgesehen, dass das Fahrzeug das mittels der Sensorvorrichtung erfasste Oberflächenprofil des Streckenabschnitts an den externen Zentralrechner versendet. Dadurch ergibt sich der Vorteil, dass das durch das Fahrzeug befahrene Oberflächenprofil dem externen Zentralrechner bereitgestellt wird. Das Oberflächenprofil kann hierdurch bei einer Auswertung des Stellwerts berücksichtigt werden. Es kann beispielsweise vorgesehen sein, dass zusätzlich zu dem Stellwert das durch das Fahrzeug erfasste Oberflächenprofil an den externen Zentralrechner übertragen wird.

Eine Weitebildung der Erfindung sieht vor, dass das Oberflächenprofil durch die Steuereinheit von dem externen Zentralrechner empfangen wird. Mit anderen Worten wird das Oberflächenprofil, welches von der Steuereinheit zur Regelung des aktiven Fahrwerks benötigt wird, durch den externen Zentralrechner bereitgestellt. Durch die Weiterbildung ergibt sich der Vorteil, dass das Oberflächenprofil unabhängig von einer Sensorvorrichtung für die Steuereinheit verfügbar ist. Es kann beispielsweise vorgesehen sein, dass das Oberflächenprofil aktiv durch die Steuereinheit von dem Zentralrechner angefordert wird, wenn sich das Fahrzeug entlang des Streckenabschnitts bewegt. Alternativ dazu kann es vorgesehen sein, dass der externe Zentralrechner die Übermittelung des Oberflächenprofils zu einem vorbestimmten Zeitpunkt einleitet. Die Erfindung umfasst auch ein Fahrzeug mit einem aktiven Fahrwerk, wobei das Fahrzeug eine Steuereinheit aufweist, die dazu eingerichtet ist, ein Oberflächenprofil für einen Streckenabschnitt zu speichern. Die Steuereinheit ist ferner dazu eingerichtet, Stellwerte nach einer vorbestimmten Übertragungsfunktion zur Anpassung an das Oberflächenprofil zu berechnen und ein aktives Fahrwerk des Fahrzeugs mittels der Stellwerte anzusteuern. Das Fahrzeug weist eine Stoßdämpfersensorik und/oder eine Reifensensorik auf, die dazu eingerichtet ist, vertikale Beschleunigungen während des Befahrens des Streckenabschnitts zu erfassen und an die Steuereinheit zu übertragen. Es ist vorgesehen, dass das Fahrzeug dazu eingerichtet ist, die Stellwerte und die vertikalen Beschleunigungen an einen externen Zentralrechner zu versenden.

Die Erfindung umfasst auch einen Zentralrechner nach Anspruch 10.

Zu der Erfindung gehören auch Weiterbildungen des erfindungsgemäßen Fahrzeugs und des erfindungsgemäßen Zentralrechners, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen des erfindungsgemäßen Fahrzeugs und des erfindungsgemäßen Zentralrechners hier nicht noch einmal beschrieben.

Die Erfindung umfasst auch die Kombinationen der Merkmale der beschriebenen Ausführungsformen.

Im Folgenden ist ein Ausführungsbeispiel der Erfindung beschrieben. Hierzu zeigt:
- Fig. 1: ein Fahrzeug mit einem aktiven Fahrwerk;
- Fig. 2: einen Zentralrechner;
- Fig. 3: ein Oberflächenprofil;
- Fig. 4: ein weiteres Oberflächenprofil; und
- Fig. 5: einen Verfahrensablauf.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

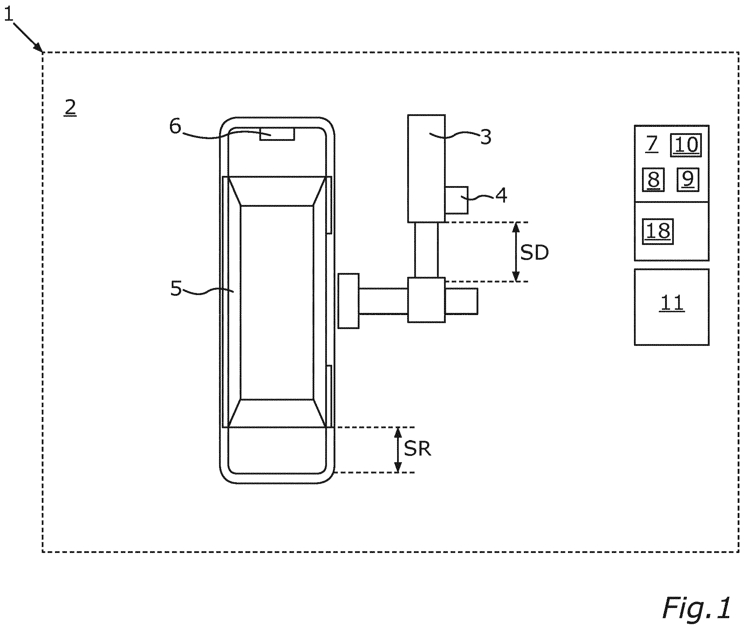

Fig. 1 zeigt ein Fahrzeug 1 mit dem aktiven Fahrwerk 2. Bei dem Fahrzeug 1 kann es sich um einen Lastkraftwagen oder einen Personenkraftwagen handeln. Das Fahrzeug 1 mit dem aktiven Fahrwerk 2 kann ein manuell gesteuertes Fahrzeug oder ein autonom gesteuertes Fahrzeug sein. Das aktive Fahrwerk 2 kann dazu eingerichtet sein, Unebenheiten einer Fahrbahnoberfläche zu berücksichtigen, um somit vertikale Beschleunigungen des Fahrzeugs zu reduzieren. Das aktive Fahrwerk 2 kann einen oder mehrere Stoßdämpfer 3 umfassen, die dazu eingerichtet sein können, auf eine Fahrzeugachse erfolgende Stöße zu dämpfen. Der Stoßdämpfer 3 kann eine Stoßdämpfersensorik 4 aufweisen, welche die jeweilige Stellung des Stoßdämpfers SD erfassen kann. Die Stellung des Stoßdämpfers SD kann durch die Einwirkung von Unebenheiten der Fahrbahnoberfläche variieren. Das aktive Fahrwerk 2 kann einen Reifen 5 umfassen, welcher eine Reifensensorik 6 aufweist. Die Reifensensorik 6 kann beispielsweise einen Druck des Reifens oder eine Verformung des Reifens erfassen. Durch die erfassten Werte kann es vorgesehen sein, dass die Reifensensorik 6 eine vertikale und/oder horizontale Verformung des Reifens SR bestimmt. Die vertikale Verformung des Reifens SR kann aufgrund von Straßenunebenheiten erfolgen. Die Auslenkung des Stoßdämpfers und die Verformung des Reifens können an die Steuereinheit 7 übermittelt werden. Die Steuereinheit 7 kann dazu eingerichtet sein, das aktive Fahrwerk mittels Stellwerten anzusteuern, um präventiv Oberflächenunebenheiten ausgleichen zu können. Zu diesem Zweck kann in der Steuereinheit 7 das Oberflächenprofil 8 gespeichert sein. Das Oberflächenprofil 8 kann für einen zu befahrenden Streckenabschnitt die jeweiligen Höhenwerte umfassen. Die Erstellung der Stellwerte für beispielsweise den Stoßdämpfer 3 kann gemäß der vorbestimmten Übertragungsfunktion 9 oder der angepassten Übertragungsfunktion 10 erfolgen. Die Ansteuerung des Stoßdämpfers 3 durch die Steuereinheit 7 kann beispielsweise eine Veränderung der Höhe des Rads oder eine Anpassung der Dämpfungsstärke des Stoßdämpfers 3 bewirken. Das Oberflächenprofil 8 kann beispielsweise durch eine Sensorvorrichtung 11 des Fahrzeugs 1 bereitgestellt werden. Dabei kann es sich beispielsweise um ein Lidar-System handeln, ein Radar-System oder ein optisches Erfassungssystem, welches dazu eingerichtet ist, die Oberfläche des Streckenabschnitts zu erfassen.

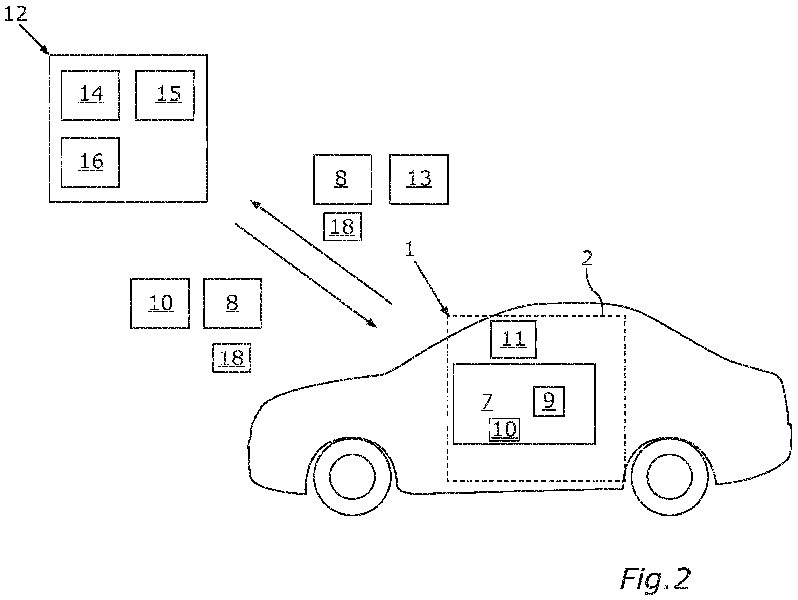

Fig. 2 beschreibt einen externen Zentralrechner. Der externe Zentralrechner 12 weist einen Mikroprozessor auf und ist außerhalb des Fahrzeugs 1 angeordnet. Der externe Zentralrechner 12 ist kann dazu eingerichtet, Übertragungen von Daten mit dem Fahrzeug 1 durchzuführen. So kann es beispielsweise vorgesehen sein, dass der externe Zentralrechner 12 Oberflächenprofile 8 für Fahrzeuge 1 bereitstellt, oder durch die Sensorvorrichtungen 11 des Fahrzeugs 1 erfasste Oberflächenprofile 8 empfängt. Die Aufgabe des externen Zentralrechners 12 kann darin bestehen, ein angefragtes Oberflächenprofil 8 an ein Fahrzeug 1 bereitzustellen. Der externe Zentralrechner 12 kann dazu eingerichtet sein, einen Stellwert 18 eines Fahrzeugs 1 zu empfangen, um diesen auszuwerten. Die Auswertung des Stellwerts 18 kann den Zweck haben, die Übertragungsfunktion 9 eines Fahrzeugs 1 durch eine angepasste Übertragungsfunktion 10 zu ersetzen. Dies kann beispielsweise erforderlich sein, falls ein Alterungsprozess von Komponenten des aktiven Fahrwerks 2 eine Änderung des Stellwerts 18 des Fahrzeugs 1 erfordert.

Der externe Zentralrechner 12 kann den von dem Fahrzeug empfangenen Stellwert 18 mit Eingangsgrößen und Ausgangsgrößen von der Steuereinheit 7 des Fahrzeugs 1 empfangen. Um einen Vergleich zu ermöglichen, kann in dem externen Zentralrechner 12 eine Referenzübertragungsfunktion 14 gespeichert sein. Diese kann beispielsweise mit der vorbestimmten Übertragungsfunktion des Fahrzeugs 1 identisch sein. Mittels des Referenzmodells 14 kann der externe Zentralrechner 12 die erwarteten vertikalen Beschleunigungen 15 berechnen. Es können somit die zu erwartenden vertikalen Beschleunigungen 15 für den Streckenabschnitt berechnet werden. In einem Idealfall müssten die zu erwartenden vertikalen Beschleunigungen mit den erfassten vertikalen Beschleunigungen übereinstimmen. Aufgrund von Fertigungsschwankungen oder Verschleißprozessen kann es zu Abweichungen 16 zwischen erwarteten vertikalen Beschleunigungen und erfassten vertikalen Beschleunigungen kommen. Die Abweichung kann somit darauf hindeuten, dass die durch die Steuereinheit des Fahrzeugs 1 verwendete, vorbestimmte Übertragungsfunktion 9 fehlerhaft ist und durch die angepasste Übertragungsfunktion 10 ersetzt werden muss. Die Generierung der angepassten Übertragungsfunktion 10 kann beispielsweise mittels eines Fit-Prozesses durch den externen Zentralrechner 12 erfolgen, wobei ein Fit einzelner Parameter durchgeführt werden kann, um die Abweichung 16 zu reduzieren.

Es kann vorgesehen sein, dass das beschriebene Verfahren durch den externen Zentralrechner 12 für mehrere Fahrzeuge 1 durchgeführt wird. Dabei können die Abweichungen 16 zwischen den erwarteten vertikalen Beschleunigungen 15 und den durch die einzelnen Fahrzeuge 1 erfassten vertikalen Beschleunigungen bestimmt werden. Bestehen Abweichungen 16, die einen vorbestimmten Schwellenwert überschreiten, kann dies darauf hindeuten, dass das Referenzmodell 14 ungeeignet ist. In diesem Fall kann das Fit-Verfahren an Parametern des Referenzmodells 14 durchgeführt werden, um die Abweichungen 16 zu minimieren.

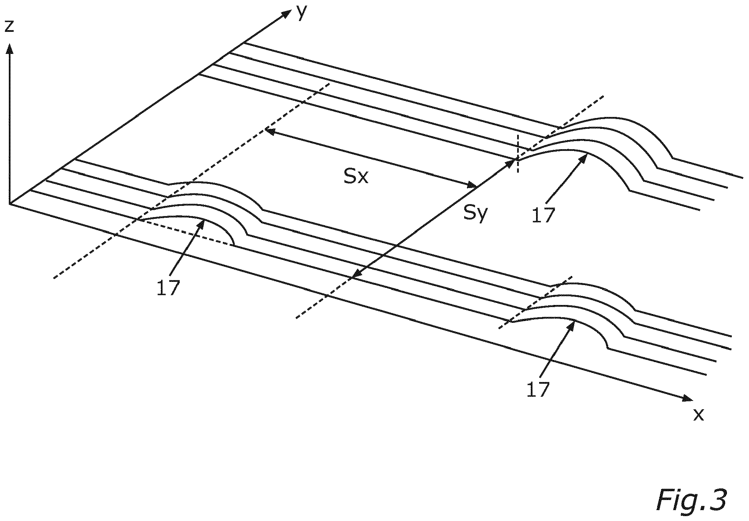

Fig. 3 zeigt ein Oberflächenprofil. Das Oberflächenprofil 8 kann durch die Steuereinheit 7 des Fahrzeugs 1 auf Grundlage der Stoßdämpferstellung SD, der Reifenverformung SR und/oder erfasster Werte der Sensorvorrichtung 11 generiert worden sein. Das Oberflächenprofil 8 kann ein Koordinatensystem aufweisen, wobei x eine Richtung entlang der Fahrtrichtung anzeigt, y die Straßenbreite und z die Höhe. Das gezeigte Oberflächenprofil 8 zeigt Unebenheiten 17 in Form von Bodenwellen, welche entlang eines Streckenabschnitts auftreten. Die Position der Unebenheiten 17 kann beispielsweise innerhalb der x-y-Ebene beschrieben sein. Zwischen zwei der dargestellten Unebenheiten 17 kann entlang der x-Richtung ein Abstand Sx und in der y-Richtung ein Abstand Sy vorhanden sein. Die Abstände Sx und Sy können auch durch das Fahrzeug 1 dazu verwendet werden, die aktuelle geografische Position zu synchronisieren. Es ist vorteilhaft, die Anzahl der Betriebsdaten und geografischen Positionen mittels einer geeigneten vorbestimmten Kompression zu verringern. So können sinnvollerweise gerade, beziehungsweise neutrale Streckenabschnitte, die keine relevante Auswirkung auf die Regelung haben, überbrückt bzw. komprimiert werden. Hierbei kann der Abstand bis zum nächsten markanten Punkt in x- und y-Richtung gespeichert werden.

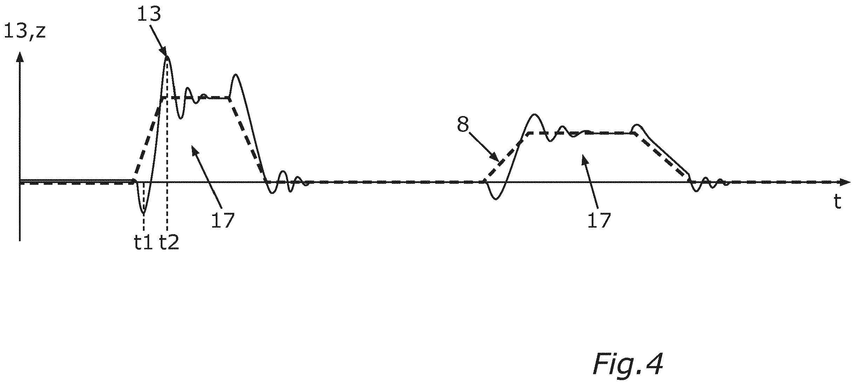

Fig. 4 zeigt ein Oberflächenprofil. Die Abbildung zeigt einen zeitlichen Verlauf der Stoßdämpferstellung SD gegen die Zeit. Bei der Stoßdämpferstellung SD kann es sich beispielsweise um eine Auslenkung des Stoßdämpfers 3 aus einer Mittelposition handeln, welche durch die Stoßdämpfersensorik 4 erfasst wurde. Das Fahrzeug 1 kann entlang des Streckenabschnitts zwei Unebenheiten 17 überfahren haben. Dadurch kann es zu einer vertikalen Beschleunigung 13 des Fahrzeugs 1 gekommen sein. Der Verlauf der Linie zeigt zu einem Zeitpunkt t1 ein Unterschwingen und zu einem Zeitpunkt t2 ein Überschwingen aufgrund der Unebenheiten 17 auf. Aus dem Verlauf Stoßdämpferstellung SD kann die Steuereinheit 7 den Verlauf des Oberflächenprofils 8 bestimmen. Es kann vorgesehen sein, dass die geografische Position und die Stoßdämpferstellung SD zu vorbestimmten Zeitpunkten erfasst werden. Das heißt, dass über die Zeit einem jeweiligen Wert der Stoßdämpferstellung SD eine jeweilige geografische Position zugeordnet werden kann. Somit ist es möglich, dass aus dem zeitlichen Verlauf der Stoßdämpferstellung SD eine örtliche Zuordnung der Unebenheiten 17 erfolgen kann.

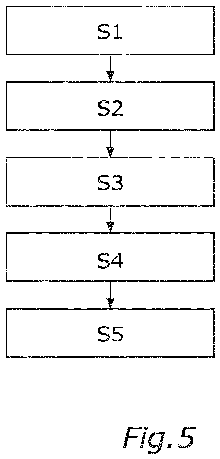

Fig. 5 zeigt einen möglichen Ablauf eines Verfahrens. In einem ersten Schritt S1, kann es vorgesehen sein, dass das Oberflächenprofil 8 durch den externen Zentralrechner 12 an das Fahrzeug 1 übertragen wird. Dies kann beispielsweise aufgrund einer Anfrage des Fahrzeugs 1 an den externen Zentralrechner 12 erfolgen, wobei das Oberflächenprofil 8 für einen vor dem Fahrzeug 1 liegenden Streckenabschnitt angefordert wird. Alternativ hierzu kann das Oberflächenprofil 8 des Streckenabschnitts durch die Sensorvorrichtung 11 des Fahrzeugs 1 vor dem Befahren erfasst und an die Steuereinheit 7 übertragen werden. Die Erfassung kann beispielsweise mittels Lidar oder einer Kamera erfolgen. Das Oberflächenprofil 8 kann auch aus einer vorangegangenen Fahrt des Fahrzeugs 1 bekannt sein. Während der vorangegangenen Fahrt können die Stoßdämpferstellung SD und die Reifenverformung SR aufgezeichnet und durch die Steuereinheit 7 zur Bestimmung des Oberflächenprofils 8 ausgewertet worden sein.

Fährt das Fahrzeug 1 entlang des Streckenabschnitts, kann die Steuereinheit 7 das aktive Fahrwerk 2 aufgrund des in der Steuereinheit 7 gespeicherten Oberflächenprofils 8 ansteuern, um Unebenheiten ausgleichen zu können (S2). Die Stellwerte 18 können durch die Steuereinheit 7 nach der vorbestimmten Übertragungsfunktion 9 generiert werden. So kann beispielsweise in Abhängigkeit des Oberflächenprofils 8 eine Dämpfungsstärke des Stoßdämpfers 3 erhöht oder reduziert werden. Bei der Regelung kann es vorgesehen sein, dass ein jeweiliger Reifendruck berücksichtigt wird, um die durch die Reifen 5 erfolgende Dämpfung zu berücksichtigen. Aus einer aktuellen geografischen Position des Fahrzeugs 1, der Radstellungen und einer aktuellen Geschwindigkeit des Fahrzeugs 1 kann die Steuereinheit 7 eine Trajektorie eines jeweiligen Rads prognostizieren. Somit kann der durch das Rad befahrene Höhenverlauf bestimmt werden und eine jeweilige Niveauregulierung der Räder durch das aktive Fahrwerk 2 erfolgen, um Unebenheiten 7 auszugleichen und/oder vertikale Beschleunigungen zu minimieren. Die hierfür erforderlichen Stellwerte können durch die Steuereinheit 7 mittels der Übertragungsfunktionen 9, 10 berechnet werden. Zur Überprüfung der Übertragungsfunktionen 9, 10 kann eine Erfassung der Stoßdämpferstellung SD durch die Stoßdämpfersensorik 4 und/oder der Reifenverformung SR durch die Reifensensorik 6 vorgesehen sein, wodurch die vertikale Beschleunigung des Fahrzeugs 1 während des Befahrens des Streckenabschnitts bestimmt werden kann.

In einem Schritt S3 kann es vorgesehen sein, dass das Fahrzeug 1 die Stellwerte und die erfasste vertikale Beschleunigung an den externen Zentralrechner überträgt.

Der externe Zentralrechner 12 kann die empfangenen Stellwerte 18 und die erfassten vertikalen Beschleunigungen des Fahrzeugs 1 empfangen und speichern. Um eine Auswertung des Stellwerts 18 und eventuell eine Anpassung der in dem Fahrzeug gespeicherten Übertragungsfunktion 9 zu ermöglichen, kann es vorgesehen sein, dass der externe Zentralrechner 12 nach einem Referenzmodell 14 die Stellwerte 18 berechnet. Der externe Zentralrechner kann die Abweichungen 16 zwischen der erfassten vertikalen Beschleunigung und der erwarteten vertikalen Beschleunigung bestimmen. Auf Grundlage der Abweichungen 16 kann die vorbestimmte Übertragungsfunktion 9 durch die angepasste Übertragungsfunktion 10 ersetzt werden, für welche unter Auswertung der Stellwerte und der Erfassten vertikalen Beschleunigungen eine geringere Abweichung 16 nach einem vorbestimmten Verfahren prognostiziert wird. In einem Schritt S5 kann die angepasste Übertragungsfunktion 10 an das Fahrzeug übersandt werden. In der Steuereinheit 7 des Fahrzeugs 1 kann die vorgebestimmte Übertragungsfunktion 9 durch die angepasste Übertragungsfunktion 10 ersetzt werden. Somit werden die zukünftigen Stellwerte 18 nach der angepassten Übertragungsfunktion 10 generiert.

Ein Stabilitätssystem mit aktivem Fahrwerk ist bereits seit mehreren Jahren in Serie verfügbar. Das System versucht einen optimalen Komfort zu erzeugen, indem Bodenwellen und Straßenunebenheiten durch ein Luftfedersystem ausgeglichen werden. Hierzu werden die Bodenwellen unmittelbar vor dem Fahrzeug 1 mit einer 3D-Kamera vermessen. Zusätzlich kann das System mit Hilfe von Hydraulikzylindern an den Federbeinen Karosserieneigungen bei Kurvenfahrten und Nickbewegungen beim Bremsen und Anfahren reduzieren.

Parallel dazu werden inzwischen von verschiedenen Anbietern hochpräzise Karten für autonomes Fahren erstellt, indem mit fahrzeugeigener Sensorik (Kameras, Lidar et cetera) die Fahrbahn beziehungsweise das Umfeld erfasst wird. Die Karten bieten unter anderem:
- die Anzahl und Breite der Fahrspuren
- Details wie Steigung und Kurvenverlauf der Straße
- Fahrbahnmarkierungen und Objekte am Fahrbahnrand wie etwa Verkehrsschilder und deren Informationen.

Die Genauigkeit liegt dabei unter 0,5 m in Längsrichtung eines Streckenabschnitts und bei unter 15 Zentimeter seitlich. Bei Stereokameravarianten liegt die Erfassungsgenauigkeit bei bis zu 3 mm.

Die Stereokameravarianten funktionieren lediglich bei Tag und bei gutem Wetter, da an die Erfassung sehr hohe Anforderungen gestellt werden. Weiter wird eine dedizierte Stereokamera für den Frontbereich unmittelbar vor dem Fahrzeug benötigt. Diese kann aufgrund der konträren Anforderungen nicht oder nur sehr eingeschränkt gleichzeitig für einen mittleren Entfernungs- bzw. den Fernbereich benutzt werden.

Die vorgestellte Erfindung soll eine nahezu perfekte Fahrwerksregelung ermöglichen. Dies ist insbesondere für autonome Fahrzeuge von Interesse, da die frei zur Verfügung stehende Zeit für den Fahrer sowie weitere Insassen nun anderweitig genutzt werden kann und dabei leicht "Motion Sickness" oder Reise-/Bewegungskrankheit (Kinetose) auftreten kann. Zum einen soll das vorgestellte System über die Fahrwerks- beziehungsweise Reifensensorik mit weiteren vorhandenen Sensoren eine hochgenaue Erfassung des Straßenprofils ermöglichen. Darüber hinaus soll das Profil der Straße möglichst hochauflösend und vollständig erfasst werden sowie kontinuierlich auf aktuellem Stand gehalten werden. Weiter soll eine nahezu perfekte Regelung über das kollaborative Erfassen und Anpassen der Regeldifferenz des Dämpfungs- und/oder Regelsystems erreicht werden.

Verschiedene Aspekte sollen in Kombination zu einer optimalen Fahrwerksregelung führen, wie eine robuste, genaue und stets aktuelle Erfassung der Straße.
- Hierzu sollen die Fahrzeuge auf hochgenaue Kartendaten zurückgreifen, Aktualisierungen aber auch zurückliefern in die Cloud beziehungsweise das Backend. Die hochgenaue Erfassung der Straße kann sich der bisher bekannten Sensorik (3D-Stereokamera, Surroundkameras, Lidar, Intertialsensorik, Neigungs-, Kippsensorik, GPS/GNSS, et cetera und entsprechende Fusionierung sämtlicher Sensoren) bedienen. Zusätzlich kann die Stellung/Bewegung der Stoßdämpfer, des Dämpfungssystems beziehungsweise die Stellgrößen oder Position des aktiven Dämpfungssystems jedes einzelnen Dämpfers für die Erfassung der Straße beziehungsweise des genauen Straßenprofils als Sensor verwendet werden.

Statt der bisherigen vermittelten Sensor-Daten können auch die Fahrwerksinformationen (als Sensor verwendet) in die Cloud zurückgesendet werden. In einer Variante kann zusätzlich der Reifen als Sensor verwendet werden. Dieser bildet zusammen mit dem Dämpfersystem den Kontakt zur Straße. Zusammen mit der Aktorik (aktives Fahrwerk), den Fahrzeugparametern und der bereits o. g. Sensorik lässt sich dieser Regelkreis vollständig oder zumindest weitestgehend beschreiben. Der Reifen verformt sich entsprechend der auf ihn einwirkenden Kräfte (Beschleunigung, abhängig von Fahrbahnverlauf/Neigung/Höhenprofil, Fahrzeuggewicht, Insassen beziehungsweise Beladung, aktueller Dämpfercharakteristik).

Die Verformung der Reifen lässt sich auf unterschiedliche Arten und Weisen ermitteln. Denkbar ist eine Messung des Reifendrucks mittels Dehnungsmessstreifen beziehungsweise Piezo-Sensoren mittels Ultraschall (Höhenmessung zum Beispiel innerhalb des Reifens), siehe auch Fig. 1. Dieses kann aufgrund der kontinuierlichen Datenerfassung und drahtlosen Transmission durchgeführt werden.

Die Lokalisierung des Fahrzeugs 1 im Umfeldmodell kann mit den üblichen dafür vorgesehenen Sensoren (Lidar, Radar, Surround-Kameras, GPS, V2X) erreicht werden. Zusätzlich kann die Lokalisierung über eine Synchronisierung auf die kartographierten Bodenwellen beziehungsweise Unebenheiten stattfinden. Eine Korrelation der unterschiedlichen Positionen der Bodenwellen zueinander beziehungsweise bei entsprechender Ausdehnung beziehungsweise Genauigkeit des Systems auch charakteristische Merkmale, wie zum Beispiel Beginn oder Scheitelpunkt der Bodenwelle, können selbst ermittelt werden, siehe auch Fig. 3.

Unter Berücksichtigung weiterer Parameter, wie Fahrzeugtyp und Ausführung und den entsprechenden Abweichungen zwischen den Fahrzeugen, können die Daten kollaborativ gesammelt im externen Zentralrechner 12 zusammengeführt und ausgewertet werden.

Darüber hinaus kann die Parameterdrift aufgrund einer Alterung der Sensorik 4, 6, beziehungsweise sonstiger Elemente, die die Erfassung beeinflussen, bestimmt werden. Dies kann in dem externen Zentralrechner 12 mittels Abweichungen 16 zum im Zentralrechner 12 hinterlegten Datensatz erkannt werden. Der externe Zentralrechner 12 kann Korrekturfaktoren ermitteln, um die individuellen Abweichungen zu kompensieren. Diese können in der angepassten Übertragungsfunktion 10 für das jeweilige Fahrzeug 1 gespeichert sein und an das Fahrzeug übertragen werden. In diesem Schritt können auch Abweichungen 16 der Aktorik des aktiven Fahrwerks 2 ausgeglichen werden.

Nahezu perfekte Stellwerte 18 können mittels einer kollaborativen Optimierung des Referenzmodells 14 ermöglicht werden. Neben der exakten Erfassung des Oberflächenprofils 8 einer Straße und der Ermittlung möglicher Abweichungen der Sensorik 4, 6, 11 soll in einem weiteren Schritt das in dem externen Zentralrechner 12 ermittelte und/oder erlernte, beziehungsweise trainierte angepasste Referenzmodell 14 angewendet werden (ähnlich autonomem Fahren), um für ein jeweiliges Fahrzeug 1 die angepasste Übertragungsfunktion 10 zu generieren. Für die zurückzulegende Strecke können dem Fahrzeug 1 das jeweilige Oberflächenprofil 8 und die angepasste Übertragungsfunktion 10 vorsorglich übermittelt werden. Die resultierende Abweichung 16 der erfassten vertikalen Beschleunigungen des Fahrzeugs 1 von den erwarteten vertikalen Beschleunigungen 15 soll anschließend durch den externen Zentralrechner 12 plausibilisiert und/oder analysiert werden. Im Rahmen dieses Prozesses kann durch den externen Zentralrechner 12 untersucht werden, ob die Abweichung 16 auf Störgrößen zurückzuführen ist oder aufgrund einer noch nicht "perfekten" angepassten Übertragungsfunktion 10 in dem Fahrzeug 1 aufgetreten ist. Weicht die erfasste vertikale Beschleunigung der angepassten Übertragungsfunktion 10 noch ab, wird dies in dem externen Zentralrechner 12 hinterlegt, und es wird versucht, im externen Zentralrechner 12 die angepasste Übertragungsfunktion 10 beziehungsweise die damit berechneten Stellwerte zu optimieren.

Dies kann dann dem nächsten Fahrzeug 1, welches unter entsprechender Konstellation "Stimulus Daten" anlegt, also die gleiche Position des Oberflächenprofils 8 abfährt, zur Verfügung gestellt und angewendet werden. Solange die Abweichung 16 noch nicht zufriedenstellend klein genug ist, wird dieser Vorgang wiederholt, also die angepasste Übertragungsfunktion 10 oder die Stellgröße angepasst. Arbeitet das aktive Fahrwerk 2 bei einer Ansteuerung durch die Steuereinheit 7 nach der angepassten Übertragungsfunktion 10 für genau diese Konstellation also unter diesen Eingangsparametern für diese Position so, dass ein vorbestimmter Schwellenwert der Abweichung 16 unterschritten wird, wird die angepasste Übertragungsfunktion 10 in der Steuereinheit 7 beibehalten. Abweichungen 16 aufgrund Veränderungen im Oberflächenprofil 8 können mittels Synchronisierung der Eingangswerte, welche die Stoßdämpferstellung SD und die Reifenverformung SR umfassen können (Matching der Position), detektiert werden. Diese können an den externen Zentralrechner 12 zur Aktualisierung hochgeladen werden, um ein in dem externen Zentralrechner 12 gespeichertes Oberflächenprofil 8 zu aktualisieren. Dies geschieht naturgemäß erst nach entsprechender statistischer und weiterer Plausibilisierung.

Es ist in einer Ausführungsform vorgesehen, dass für die sehr große Anzahl der Daten eine geeignete Kompression ermittelt wird. So können sinnvollerweise gerade beziehungsweise neutrale Streckenabschnitte, die keine relevante Auswirkung auf die Regelung haben, überbrückt beziehungsweise komprimiert werden. Der Abstand bis zum nächsten markanten Punkt in x- und y-Richtung kann dann gespeichert werden. Das aktive Fahrwerk 2 kann ein Dämpfungssystem umfassen, welches rein passiv sein kann (bei reiner Erfassung) oder ein aktives Dämpfungssystem zum Beispiel mit verstellbarer Zug- und Druckstufe, als Luftdruckversion oder mit zusätzlicher hydraulischer Verstellung für Niveauausgleich. Es kann auch elektrisch/ elektromechanisch betrieben sein und soll hier nicht weiter einschränkend beschrieben werden. Zumindest soll erwähnt werden, dass mit dem vorgestellten Ansatz unter anderem eine nahezu perfekte Regelung für das aktive Fahrwerk 2 mittels einer Bereitstellung einer angepassten Übertragungsfunktion 10 angestrebt wird. Die Aktorik des aktiven Fahrwerks 2 umfasst idealerweise einen breiten Dynamikbereich, um sowohl grobe Auslenkungen und Unebenheiten 17 im Oberflächenprofil 8 als auch kleinste Bewegungen kompensieren zu können.

Das Kompensieren kann tiefe bis höchste Frequenzen umfassen. Das aktive Fahrwerk 2 ist bei einer Bereitstellung des Oberflächenprofils 8 durch den externen Zentralrechner 12 wetterunabhängig und funktioniert auch bei Regen, Nebel und bei absoluter Dunkelheit, weil es in diesem Fall nicht auf eine fahrzeugeigene Sensorvorrichtung 11 angewiesen ist. Wie bei einem ausschließlich kamerabasierten System können die Unebenheiten von Straßen (wenn diese in dem Oberflächenprofil 8, welches der Steuereinheit 7 bereitgestellt wird, vollständig erfasst sind) vorhergesagt werden und das aktive Fahrwerk 2 oder Dämpfersystem entsprechend durch die Steuereinheit 7 präventiv angesteuert oder vorkonditioniert werden. Das System kann kostengünstiger implementiert werden, da keine eigene 3D-Stereokamera ausschließlich für die Erfassung des Oberflächenprofils bereitgestellt werden muss, welche die ersten 15 m vor dem Fahrzeug 1 mit hoher Auflösung aufzeichnet. Die Stoßdämpfersensorik 4 kann sehr sensitive Rückmeldung geben, da die einzelnen Stoßdämpfer 3 (zusammen mit den Reifen 5) direkten Kontakt zur Straße haben und das Fahrzeug 1 mit seiner relativ hohen Masse eher träge ist und "gegenhält". Die Steigungen der Bodenwellen können zum Beispiel an der Stoßdämpfersensorik 4 und/oder der Reifensensorik 6 eines jeden Rads einzeln erfasst werden, dadurch erfolgt eine quasi analoge Rückmeldung (siehe auch Fig. 3). Die Methode kann auch zur Orientierung selbst dienen (Matching des gemessenen Oberflächenprofils 8 mit den Kartendaten) und je nach Qualität als zusätzlicher Sensor dienen für die Lokalisierung im Umfeldmodell.

Durch die Kombination von Messdaten der Stoßdämpfersensorik, wie der Stoßdämpferstellung SD, und der Reifensensorik, wie der Reifenverformung SR, mit Messdaten der Sensorvorrichtung kann die Genauigkeit des Oberflächenprofils 8 gesteigert werden. Die Robustheit der Erfassung kann gesteigert werden, weil die Messdaten unterschiedlicher Sensoren unabhängig voneinander erstellt und verglichen werden können. Durch das Verfahren kann im Zweifel eine Genauigkeit gesteigert werden. Eine mögliche Redundanz bei Totalausfall der Sensorvorrichtung 11 wird dabei hergestellt.

Fahrzeuge 1, die für eine initiale Erfassung des Oberflächenprofils 8 verwendet werden, können die Sensorvorrichtung 11 aufweisen, welche beispielsweise eine 3D-Stereokamera, Lidarscanner oder Laserscanner umfasst. Durch die Sensorvorrichtung 11 erfasste Daten in Bezug auf Oberflächenprofile 8 können durch die Stoßdämpferstellung SD und die Reifenverformung SR ergänzt werden, um die Genauigkeit des erfassten Oberflächenprofils 8 zu steigern. Die Stoßdämpfersensorik 4 und die Reifensensorik 6 können somit zur hochpräzisen Erfassung von Oberflächenprofilen 8 verwendet werden.

Diese Methode könnte zum Beispiel auch in Eisenbahnzügen, insbesondere Hochgeschwindigkeitszügen verwendet werden. Hier ist naturgemäß die zu ertastende Fahrbahnbreite oder Varianz deutlich kleiner. Eine Synchronisierung ist hier deutlich einfacher. Weiter ist das iterative Ausregeln präzise, da der Zug während der Fahrt sehr gut gegen die Referenzdaten verifiziert werden kann (Unterscheidung von Störgrößen zu Alterung und Parameterdrift).

Durch Kartografie der Unebenheiten beziehungsweise des gesamten Oberflächenprofils 8 könnten auch andere Fahrzeuge 1 beziehungsweise Gespanne prädiktiv durch deren aktive Fahrwerke 2 stabilisiert werden.

Insgesamt zeigt das Beispiel, wie durch die Erfindung ein adaptives Stabilitätssystem bereitgestellt werden kann.

## Patentansprüche

1. Verfahren zur Anpassung einer Übertragungsfunktion (9) eines aktiven Fahrwerks (2) eines Fahrzeugs (1), wobei
- durch das Fahrzeug (1) ein Streckenabschnitt befahren wird, für den in einer Steuereinheit (7) des Fahrzeugs (1) ein Oberflächenprofil (8) gespeichert ist,
- das aktive Fahrwerk (2) durch die Steuereinheit (7) nach einer vorbestimmten Übertragungsfunktion (9) zur Anpassung an das Oberflächenprofil (8) mittels Stellwerten (18) angesteuert wird, um Unebenheiten des Oberflächenprofils (8) auszugleichen, und
- durch eine Stoßdämpfersensorik (4) und/oder eine Reifensensorik (6) des Fahrzeugs (1) vertikale Beschleunigungen (13) während des Befahrens des Streckenabschnitts erfasst und an die Steuereinheit (7) übertragen werden,
**dadurch gekennzeichnet, dass**
die Stellwerte (18) und die erfassten vertikalen Beschleunigungen (13) durch das Fahrzeug (1) an einen externen Zentralrechner (12) übertragen werden.

2. Verfahren nach Anspruch 1, wobei durch den externen Zentralrechner (12) eine Abweichung (16) der erfassten vertikalen Beschleunigungen (13) von mittels eines fahrzeugspezifischen Referenzmodells (14) für den Streckenabschnitt berechneten, erwarteten vertikalen Beschleunigungen (15) bestimmt wird.

3. Verfahren nach Anspruch 2, wobei aus der Abweichung (16) durch den Zentralrechner (12) das Referenzmodell (14) angepasst wird.

4. Verfahren nach Anspruch 2 oder 3, wobei
- aus der Abweichung (16) durch den Zentralrechner (12) eine angepasste Übertragungsfunktion (10) generiert und an die Steuereinheit (7) übertragen wird, und
- die vorbestimmte Übertragungsfunktion (9) in der Steuereinheit (7) durch die angepasste Übertragungsfunktion (10) ersetzt wird.

5. Verfahren nach einem der vorhergehenden Ansprüche, wobei die Stellwerte (18) für den Streckenabschnitt nach der vorbestimmten Übertragungsfunktion (9) durch den externen Zentralrechner (12) berechnet und an die Steuereinheit (7) zur Ansteuerung des aktiven Fahrwerks (2) übertragen werden.

6. Verfahren nach einem der vorhergehenden Ansprüche, wobei das Oberflächenprofil (8) beim Überfahren des Streckenabschnitts oder bei einem vorherigen Überfahren des Streckenabschnitts durch eine Sensorvorrichtung (11) des Fahrzeugs (1) erfasst und in der Steuereinheit (7) gespeichert wird.

7. Verfahren nach einem der vorhergehenden Ansprüche, wobei das Oberflächenprofil (8) durch das Fahrzeug (1) an den externen Zentralrechner (12) übertragen wird.

8. Verfahren nach einem der vorhergehenden Ansprüche, wobei das Oberflächenprofil (8) durch die Steuereinheit (7) von dem externen Zentralrechner (12) empfangen wird.

9. Fahrzeug (1) mit einem aktiven Fahrwerk (2), wobei
- das Fahrzeug (1) eine Steuereinheit (7) aufweist, die dazu eingerichtet ist, ein Oberflächenprofil (8) für einen Streckenabschnitt zu speichern,
- die Steuereinheit (7) dazu eingerichtet ist, Stellwerte (18) nach einer vorbestimmten Übertragungsfunktion (9) zur Anpassung an das Oberflächenprofil (8) zu berechnen und das aktive Fahrwerk (2) des Fahrzeugs (1) mittels der Stellwerte (18) anzusteuern,
- das Fahrzeug (1) eine Stoßdämpfersensorik (4) und/oder eine Reifensensorik (6) aufweist, die dazu eingerichtet ist, vertikale Beschleunigungen (13) während des Befahrens des Streckenabschnitts zu erfassen und an die Steuereinheit (7) zu übertragen,
**dadurch gekennzeichnet, dass**
das Fahrzeug (1) dazu eingerichtet ist, die Stellwerte (17) und die erfassten vertikalen Beschleunigungen (13) an einen externen Zentralrechner (12) zu versenden.

10. Zentralrechner (12)eingerichtet für das Fahrzeug (1) nach Anspruch 9, wobei der Zentralrechner (12) ein externer Zentralrechner (12) und außerhalb des Fahrzeugs (1) angeordnet und dazu eingerichtet ist, Übertragungen von Daten mit dem Fahrzeug (1) durchzuführen, **dadurch gekennzeichnet, dass** der Zentralrechner (12) dazu eingerichtet ist, eine Abweichung (16) erfasster vertikaler Beschleunigungen (13) von mittels eines Referenzmodells (14) berechneten erwarteten vertikalen Beschleunigungen (15) zu bestimmen, und auf Grundlage der Abweichung (16) ein auf dem Zentralrechner gespeichertes Referenzmodell (14) anzupassen oder auf Grundlage der Abweichung (16) eine angepasste Übertragungsfunktion (10) zu generieren und die angepasste Übertragungsfunktion (10) an eine Steuereinheit (7) des Fahrzeugs (1) zu übertragen.

## Claims

1. Method for adapting a transfer function (9) of an active suspension (2) of a vehicle (1), wherein
- the vehicle (1) drives along a section of road for which a surface profile (8) is stored in a control unit (7) of the vehicle (1),
- the active suspension (2) is activated by the control unit (7) according to a predetermined transfer function (9) for adaptation to the surface profile (8) by means of adjustment values (18) in order to compensate for unevennesses of the surface profile (8), and
- a shock absorber sensor system (4) and/or a tire sensor system (6) of the vehicle (1) is used to record vertical accelerations (13) while driving along the section of road and transfer them to the control unit (7),
**characterized in that**
the adjustment values (18) and the recorded vertical accelerations (13) are transferred by the vehicle (1) to an external central computer (12).

2. Method according to Claim 1, wherein the external central computer (12) determines a deviation (16) of the recorded vertical accelerations (13) from expected vertical accelerations (15) calculated for the section of road by means of a vehicle-specific reference model (14).

3. Method according to Claim 2, wherein the reference model (14) is adapted from the deviation (16) by the central computer (12).

4. Method according to Claim 2 or 3, wherein
- an adapted transfer function (10) is generated from the deviation (16) by the central computer (12) and transferred to the control unit (7), and
- the predetermined transfer function (9) in the control unit (7) is replaced by the adapted transfer function (10).

5. Method according to one of the preceding claims, wherein the adjustment values (18) for the section of road are calculated by the external central computer (12) according to the predetermined transfer function (9) and transferred to the control unit (7) for activating the active suspension (2).

6. Method according to one of the preceding claims, wherein the surface profile (8) is recorded by a sensor device (11) of the vehicle (1) while the section of road is being driven along or on a previous occasion when the section of road was driven along and stored in the control unit (7).

7. Method according to one of the preceding claims, wherein the surface profile (8) is transferred by the vehicle (1) to the external central computer (12).

8. Method according to one of the preceding claims, wherein the surface profile (8) is received by the control unit (7) from the external central computer (12).

9. Vehicle (1) with an active suspension (2), wherein
- the vehicle (1) has a control unit (7) which is set up to store a surface profile (8) for a section of road,
- the control unit (7) is set up to calculate adjustment values (18) according to a predetermined transfer function (9) for adaptation to the surface profile (8) and to activate the active suspension (2) of the vehicle (1) by means of the adjustment values (18),
- the vehicle (1) has a shock absorber sensor system (4) and/or a tire sensor system (6) which is set up to record vertical accelerations (13) while driving along the section of road and to transfer them to the control unit (7),
**characterized in that**
the vehicle (1) is set up to send the adjustment values (17) and the recorded vertical accelerations (13) to an external central computer (12).

10. Central computer (12) set up for the vehicle (1) according to Claim 9, wherein the central computer (12) is an external central computer (12) and is arranged outside the vehicle (1) and is set up to carry out transfers of data with the vehicle (1), **characterized in that** the central computer (12) is set up to determine a deviation (16) of recorded vertical accelerations (13) from expected vertical accelerations (15) calculated by means of a reference model (14), and on the basis of the deviation (16) to adapt a reference model (14) stored on the central computer or on the basis of the deviation (16) to generate an adapted transfer function (10) and transfer the adapted transfer function (10) to a control unit (7) of the vehicle (1).

## Revendications

1. Procédé permettant d'adapter une fonction de transfert (9) d'un châssis actif (2) d'un véhicule (1), dans lequel
- le véhicule (1) parcourt un tronçon de route pour lequel un profil de surface (8) est mémorisé dans une unité de commande (7) du véhicule (1),
- le châssis actif (2) est piloté par l'unité de commande (7) selon une fonction de transfert prédéterminée (9) en vue de l'adaptation au profil de surface (8) au moyen de valeurs de réglage (18) afin de compenser des irrégularités du profil de surface (8), et
- un système de capteurs d'amortisseur (4) et/ou un système de capteurs de pneumatique (6) du véhicule (1) détecte(nt) des accélérations verticales (13) pendant le parcours du tronçon de route et les transmet(tent) à l'unité de commande (7),
**caractérisé en ce que** les valeurs de réglage (18) et les accélérations verticales détectées (13) sont transmises par le véhicule (1) à un ordinateur central externe (12).

2. Procédé selon la revendication 1, dans lequel l'ordinateur central externe (12) détermine un écart (16) des accélérations verticales détectées (13) par rapport à des accélérations verticales attendues (15) calculées au moyen d'un modèle de référence (14) spécifique au véhicule pour le tronçon de route.

3. Procédé selon la revendication 2, dans lequel le modèle de référence (14) est adapté par l'ordinateur central (12) selon l'écart (16).

4. Procédé selon la revendication 2 ou 3, dans lequel
- à partir de l'écart (16), l'ordinateur central (12) génère une fonction de transfert adaptée (10) et la transmet à l'unité de commande (7), et
- la fonction de transfert (9) prédéterminée est remplacée par la fonction de transfert adaptée (10) dans l'unité de commande (7).

5. Procédé selon l'une quelconque des revendications précédentes, dans lequel les valeurs de réglage (18) pour le tronçon de route sont calculées par l'ordinateur central externe (12) selon la fonction de transfert prédéterminée (9) et transmises à l'unité de commande (7) pour le pilotage du châssis actif (2).

6. Procédé selon l'une quelconque des revendications précédentes, dans lequel le profil de surface (8) est détecté par un dispositif capteur (11) du véhicule (1) lors du passage par le tronçon de route ou lors d'un passage antérieur par le tronçon de route et est mémorisé dans l'unité de commande (7).

7. Procédé selon l'une quelconque des revendications précédentes, dans lequel le profil de surface (8) est transmis par le véhicule (1) à l'ordinateur central externe (12).

8. Procédé selon l'une quelconque des revendications précédentes, dans lequel le profil de surface (8) est reçu par l'unité de commande (7) en provenance de l'ordinateur central externe (12).

9. Véhicule (1), comprenant un châssis actif (2), dans lequel
- le véhicule (1) présente une unité de commande (7) qui est conçue pour mémoriser un profil de surface (8) pour un tronçon de route,
- l'unité de commande (7) est conçue pour calculer des valeurs de réglage (18) selon une fonction de transfert prédéterminée (9) en vue de l'adaptation au profil de surface (8), et pour piloter le châssis actif (2) du véhicule (1) au moyen des valeurs de réglage (18),
- le véhicule (1) présente un système de capteurs d'amortisseur (4) et/ou un système de capteurs de pneumatique (6) qui est/sont conçu(s) pour détecter des accélérations verticales (13) pendant le parcours du tronçon de route et pour les transmettre à l'unité de commande (7),
**caractérisé en ce que** le véhicule (1) est conçu pour envoyer les valeurs de réglage (17) et les accélérations verticales détectées (13) à un ordinateur central externe (12).

10. Ordinateur central (12), conçu pour le véhicule (1) selon la revendication 9, dans lequel l'ordinateur central (12) est un ordinateur central externe (12) et est disposé à l'extérieur du véhicule (1) et est conçu pour effectuer des transmissions de données avec le véhicule (1), **caractérisé en ce que** l'ordinateur central (12) est conçu pour déterminer un écart (16) d'accélérations verticales détectées (13) par rapport à des accélérations verticales attendues (15) calculées au moyen d'un modèle de référence (14), et pour adapter sur la base de l'écart (16) un modèle de référence (14) mémorisé sur l'ordinateur central, ou pour générer sur la base de l'écart (16) une fonction de transfert adaptée (10) et pour transmettre la fonction de transfert adaptée (10) à une unité de commande (7) du véhicule (1).
